# EUROPEAN PATENT SPECIFICATION

(11) **EP 4 142 974 B1**
(45) Date of publication and mention of the grant of the patent: **22.05.2024**
(21) Application number: 21717884.7
(22) Date of filing: 09.04.2021
(51) Int. Cl.: B23C 5/10

(54) **POWER TOOL, LOCKING SYSTEM AND PLUNGE BASE**
MOTORGERÄT, SCHLIESSSYSTEM, EINTAUCHBASE
OUTIL MOTORISÉ, SYSTEM DE VERROUILLAGE, SUPPORT DE PLONGÉE

(30) Priority: 28.04.2020 GB 202006239
(43) Date of publication of application: 08.03.2023
(73) Proprietor: Black & Decker Inc., New Britain, CT 06053 (US)
(72) Inventor: LAUER, Arthur, 65510 Idstein (DE)
(74) Representative: SBD IPAdmin
(86) International application number: PCT/EP2021/059351
(87) International publication number: WO 2021/219349

(56) References cited:
- US-B2- 7 334 614

## Description

The present invention relates to a power tool according to the preamble of claim 1 and to a plunge base for a power tool according to the preamble of claim 15. Such a power tool and such a plunge base are well known from the document US 7 334 614 B2.

### BACKGROUND

A power tool such as a router may be utilized by tradesmen, craftsmen, hobbyists and other users to perform various tasks. For instance, a router may be used to perform intricate cutting projects, such as decorative profiles and trimming laminates on the edges or perimeters of a workpiece. A router also may be utilized to form grooved areas in woodworking and other material as well as to remove excess material on workpieces. Routers may utilize various types of cutting tools or router bits in order to perform these and other types of tasks.

A router normally comprises one or more handles allowing the user to grip the router during operation. This means that the user can manoeuvre the router with respect to the workpiece. It is known for a router to vary the height of the cutting tool with respect to the workpiece during operation. This is also known as a "plunge" mode of operation. The plunge mode allows the user to plunge the cutting tool of the router into the workpiece in order to cut a hole in the middle of the workpiece. The user may select between the plunge mode and a fixed mode whereby the cutting tool is maintained at a fixed distance during operation.

One router is shown in US 6,261,036 having a plunge router locking system. The plunge router locking system has a lock lever arm which has two positions, a locked and unlocked position. In the unlocked position, the lock lever arm may be held in place by the operator or by a mating catch device. When the operator wants to move the lock arm lever back to the locked position, the operator applies sufficient force to the lock arm lever and the mating catch device releases the lock arm lever.

A problem with this arrangement is that the lock arm lever can be accidentally knocked by the user and the lock arm lever will return to the locked position. Furthermore, the mating catch device is prone to failure over time because the user must keep applying force on the lock arm lever to release the lock arm lever.

Examples of the present invention aim to address the aforementioned problems.

According to an aspect of the present invention there is a power tool comprising:
a housing; a motor assembly arranged to rotate a cutting tool, the motor being mounted in the housing; at least one guide post slidably mounted to the housing; a base fixed to the at least one guide post; a plunge locking lever mounted to the housing moveable between a locked position wherein the at least one guide post is fixed with respect to the housing and an unlocked position wherein the at least one guide post is slidable with respect to the housing thereby adjusting the distance between the base and the housing wherein the plunge locking lever is biased to the locked position; and a catch mechanism arranged to engage the plunge locking lever in the unlocked position; wherein the catch mechanism is mechanically coupled to a release lever arranged to disengage the catch mechanism and release the plunge locking lever from the unlocked position.

Optionally, the plunge locking lever is moveable to a manually held unlocked position between the locked position and the unlocked position.

Optionally, the catch mechanism comprises a first part mounted on the release lever engageable with a second part mounted on the plunge locking lever.

Optionally, the first part is a hook and the second part is a reciprocal groove.

Optionally, the release lever is pivotable between a first position wherein the catch mechanism is engaged and a second position wherein the catch mechanism is disengaged.

Optionally, the release lever is biased to the first position.

Optionally, the plunge locking lever is fixed to a rod releasably engageable with the at least one slidable guide post.

Optionally, the rod is threaded through a spring arranged to bias the plunge locking lever.

Optionally, the plunge locking lever is rotatable between the locked position and the unlocked position.

Optionally, an axis of rotation of the plunge locking lever intersects with a pivot axis of the release lever.

Optionally, at least a portion of the release lever extends adjacent to the plunge locking lever when the plunge locking lever is engaged in the unlocked position.

Optionally, the plunge locking lever comprises a rotatable inner surface engageable with an outer surface of the release lever.

Optionally, the rotatable inner surface engages the outer surface the plunge locking lever is in the locked position and urges the release lever into the second position.

Optionally, the plunge locking lever and the release lever are mounted adjacent to a handle of the router.

Optionally, the plunge locking lever and the release lever are actuatable with a user's thumb when the user grips the handle.

Optionally, the power tool is a router, a plunge saw, a drill, a multitool, a oscillating tool.

According to another aspect of the present invention there is a locking system for a power tool comprising a housing, a motor assembly arranged to rotate a cutting tool, the motor being mounted in the housing, at least one guide post slidably mounted to the housing, and a base fixed to the at least one guide post, the locking system comprising: a plunge locking lever moveable between a locked position wherein the at least one guide post is fixed with respect to the housing and an unlocked position wherein the at least one guide post is slidable with respect to the housing thereby adjusting the distance between the base and the housing wherein the plunge locking lever is biased to the locked position; and a catch mechanism arranged to engage the plunge locking lever in the unlocked position; wherein the catch mechanism is mechanically coupled to a release lever arranged to disengage the catch mechanism and release the plunge locking lever from the unlocked position.

According to yet another aspect of the present invention there is a plunge base for a power tool, the plunge base comprising: a tool mount for mounting the power tool to the plunge base; at least one guide post slidably mounted to the tool mount; a base fixed to the at least one guide post; a plunge locking lever mounted to the tool mount moveable between a locked position wherein the at least one guide post is fixed with respect to the tool mount and an unlocked position wherein the at least one guide post is slidable with respect to the tool mount thereby adjusting the distance between the base and the tool mount, wherein the plunge locking lever is biased to the locked position; and a catch mechanism arranged to engage the plunge locking lever in the unlocked position; wherein the catch mechanism is mechanically coupled to a release lever arranged to disengage the catch mechanism and release the plunge locking lever from the unlocked position.

Various other aspects and further embodiments are also described in the following detailed description and in the attached claims with reference to the accompanying drawings, in which:

### FIGURES & DESCRIPTION

Figure 1 shows a front view of a router according to an example;
Figures 2a, 2b, 2c show close up front views of a router in different modes according to an example;
Figure 3 shows an exploded perspective view of a locking system of a router according to an example;
Figure 4 shows a perspective view of a locking lever according to an example;
Figures 5 and 6 shows a cross sectional side view of a locking system of the router according to an example; and
Figures 7a and 7b show plan cross sectional views of a locking system of the router according to an example.

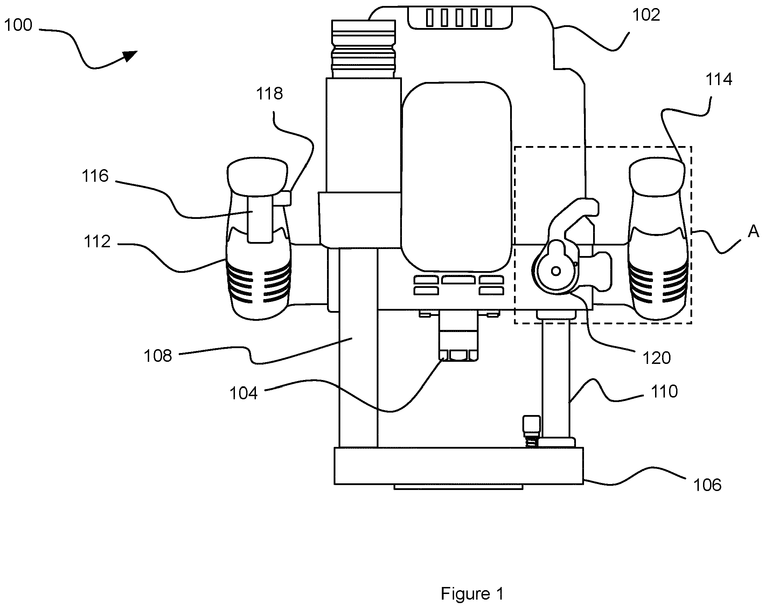

Figure 1 shows a front view of a power tool 100 according to an example. The power tool 100 as shown in Figure 1 is a router 100. Hereinafter, the power tool 100 will be referred to as a router 100, but in other examples any other type of power tool can be used such as a plunge saw, a drill, a multitool, or an oscillating tool mounted on a plunge base.

The router 100 comprises a housing 102. The housing 102 comprises a clam shell type construction having two halves which are fastened together. The halves of the housing 102 are fastened together with screws but in alternative examples any suitable means for fastening the housing 102 together may be used such as glue, clips, bolts and so on. For the purposes of clarity, the fastenings in the housing 102 are not shown.

A motor (not shown) is mounted in the housing 102 for driving a collet 104. A cutting tool (not shown) can be mounted in the collet 104 for engaging a workpiece (not shown).

As shown in Figure 1, the router 100 comprises a base 106 for engaging the workpiece. The base 106 comprises an aperture through which the cutting tool projects. The base 106 is mounted to the housing 102 via first and second guide posts 108, 110. The first and second guide posts 108, 110 are slidably mounted to the housing 102 for adjusting the relative distance of the base 106 from the collet 104. In some examples, the first and second guide posts 108, 110 are removeable. This means that the router 100 can be used without the base 106 engaging the workpiece.

The housing 102 comprises a first and second handle 112, 114 for the user to grip during operation. The first handle 112 comprises a main trigger switch 116 for operating the router 100. In some examples, the first handle 112 also comprises a lock button 118 for selectively locking the main trigger switch 116 into an "ON" status. This means that the user does not have to constantly keep pressure maintained on the main trigger switch 116 during operation of the router 100. In some examples, the main trigger switch 116 can be replaced with a momentary switch (not shown).

The motor is electrically connected to an electric power source. In some examples, the electric power source is a mains electrical supply. In some other examples, the electrical power source is a battery (not shown). The battery can be removeably mountable to the housing 102 or integral to the housing 102. In some examples, the router 100 can be powered either from both a battery source and / or a mains electrical supply.

The router 100 as shown in Figure 1 is a plunge router. Accordingly, the router 100 can be selectively operated in different modes. In a first mode, the router 100 is in a locked position. In the locked position, the first and second guide posts 108, 110 are fixed with respect to the housing 102. This means that the housing 102 and the collet 104 are fixed with respect to the base 106. Accordingly the cutting tool can be maintained at a set height above the workpiece. This means that the user of the router 100 can select how far the cutting tool projects through the aperture in the base 106.

In a second mode, the router 100 is in an unlocked position. In the unlocked position the first and second guide posts 108, 110 are slidable with respect to the housing 102. This means that the user can push down on the first and second handles 112, 114 and the first and second guide posts 108, 110 slide into or through the housing 102. In this way, the distance between the base 106 and the housing 102 can be adjusted. This means that the user can position the router 100 above the workpiece and then push the housing 102 towards the workpiece and the cutting tool plunges into the workpiece.

As discussed hereinafter, the router 100 is configured to be set in a plurality of unlocked positions for different operation modes of the router 100.

The user can select between the locked and unlocked position of the router 100 by using a locking system 120 mounted on the router 100. In some examples, the locking system 120 is actuatable when the user grips the second handle 114. For example, the user can grip the second handle 114 and actuate the locking system 120 with their thumb or their fingers.

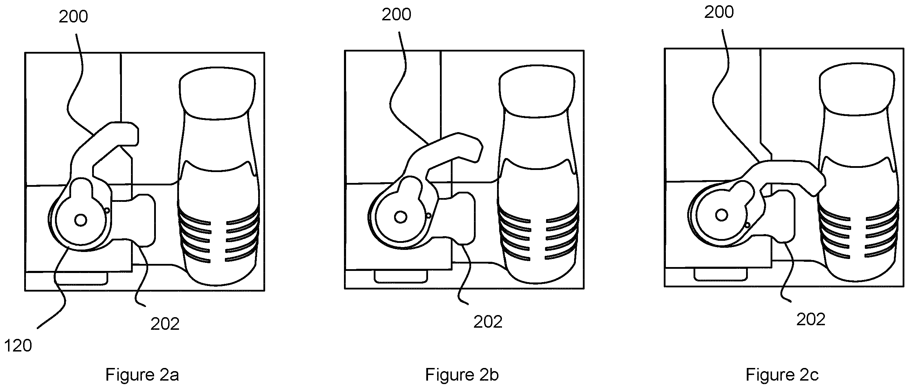

Turning to Figures 2a, 2b and 2c, the locking system 120 will be described in more detail. Figures 2a, 2b, 2c show close up front views of a router 100 in different modes according to an example. The close up front views of the router 100 are of the dotted box A as shown in Figure 1.

As can be seen from Figure 2a, the locking system 120 comprises a plunge locking lever 200 and a release lever 202.

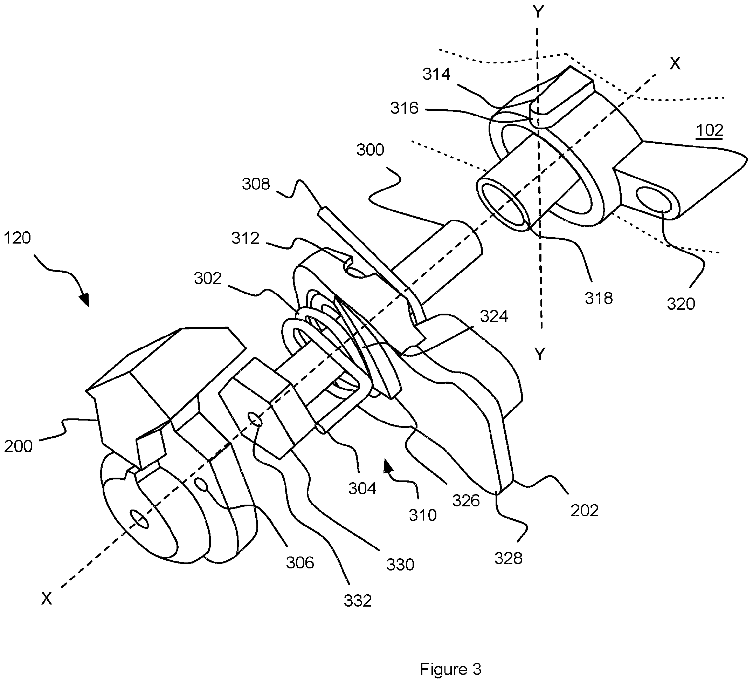

Figure 2a shows the plunge locking lever 200 in a locked position. In some examples, the plunge locking lever 200 is in the locked position in a vertical orientation. The plunge locking lever 200 is mechanically coupled to the first or second guide posts 108, 110 such that relative movement of the first and second guide posts 108, 110 is prevented when the plunge locking lever 200 is in the locked position. In some examples, the plunge locking lever 200 actuates a locking bolt 300 (as shown in Figure 3). In this way, the locking bolt 300 exerts a frictional force against the first or second guide posts 108, 110 when the plunge locking lever 200 is in the locked position. Accordingly the locking bolt 300 clamps against the first or second guide posts 108, 110 preventing relative movement therebetween. In some examples the locking bolt 200 optionally engages a reciprocal hole or detent (not shown) in the second guide post 110 and the housing 102. In other examples, an additional second locking bolt (not shown) is used to also engage with the first guide post 108. In other examples, other mechanisms can be used to lock the first and second guide posts 108, 110 such as a latch-catch mechanism, a ball bearing engaging a detent in the first and second guide posts 108, 110 or any other suitable mechanism.

The plunge locking lever 200 is moveable between the locked position shown in Figure 2a and first and second unlocked positions as respectively shown in Figures 2c and 2b. In some examples, the plunge locking lever 200 is rotatable between the locked position and the first and second unlocked positions about the longitudinal axis X-X of the locking bolt 300 (as shown in Figure 3). In some other examples, the plunge locking lever 200 is slidable between the locked position and the first and second unlocked positions. Mechanical linkages (not shown) may be coupled between the plunge locking lever 200 and the locking bolt 300 for actuating engagement between the locking bolt 300 and the first and second guide posts 108, 110.

Figures 2b and 2c show that the plunge locking lever 200 has been rotated into the first and second unlocked positions from the locked position. Optionally, in some examples the plunge locking lever 200 is biased to the locked position. In this way, the plunge locking lever 200 is urged to return to the safer locked position when manually held in the second unlocked position.

In some examples, the plunge locking lever 200 is biased with a torsion spring 302 wound around the locking bolt 300 (as shown in Figure 3). The torsion spring 302 comprises a first end 304 which projects through a hole 306 in the plunge locking lever 200. The torsion spring 302 also comprises a second end 308 which is received in a reciprocal hole (not shown) in the housing 102. Accordingly, when the plunge locking lever 200 is rotated, the torsion spring 302 is compressed and urges the plunge locking lever 200 to return to the locked position.

In some examples, the plunge locking lever 200 is not biased and the user must manually move the plunge locking lever 200 between the locked and the first and second unlocked positions. In some other examples, the plunge locking lever 200 is biased with a leaf spring, coil spring, compression spring, extension spring, or any other suitable biasing means. For example, the plunge locking lever 200 can comprise an integral resilient plastic spring for urging the plunge locking lever 200 towards the locked position.

In Figure 2b, the user maintains the plunge locking lever 200 in a manually held second unlocked position. That is, the user rotates the plunge locking lever 200 until, the locking bolt 300 no longer engages the second guide post 110. When the user releases the plunge locking lever 200 from the second unlocked position, the plunge locking lever 200 returns to the locked position as shown in Figure 2a.

In Figure 2c, the plunge locking lever 200 is rotated through the manually held second unlocked position as shown in Figure 2b and held in place in a first unlocked position. When the plunge locking lever 200 is held in the first unlocked position, the user can freely move the housing 102 with respect to the first and second guide posts 108, 110. Accordingly, the user can plunge the cutting tool into the workpiece without manually holding the plunge locking lever 200 away from the locked position. The plunge locking lever 200 is held in the first unlocked position with a catch mechanism 310 (as shown in Figure 3 and discussed further below in connection to Figure 3).

The plunge locking lever 200 is released from the first unlocked position with the release lever 202. The release lever 202 is configured disengage the catch mechanism 310 and release the plunge locking lever 200 from the first unlocked position. The plunge locking lever 200 then rotates back to the locked position as shown in Figure 2a.

In some examples, the locking system 120 is mounted sufficiently close to the second handle 114 that the user can actuate the plunge locking lever 200 with the user's thumb and actuate the release lever 202 with the user's fingers. In order for the plunge locking lever 200 to freely rotate back to the locked position form the first unlocked position, the user must make sure the user's thumb is not in the path of the plunge locking lever 200.

The plunge locking lever 200 rotates approximately 40 to 45 degrees between the locked position shown in Figure 2a and the first unlocked position shown in Figure 2c. The second unlocked position of the plunge locking lever 200 as shown in Figure 2b requires that the plunge locking lever 200 is rotated between locked position and the first unlocked position. In some examples, the plunge locking lever 200 can be rotated through a greater angle between the locked position and the first and second unlocked positions.

Turning to Figure 3, the locking system 120 will be discussed in further detail. Figure 3 shows an exploded perspective view of the locking system 120 of the router 100.

As mentioned above, the locking system 120 comprises a catch mechanism 310 and a release lever 202 mechanically coupled to the catch mechanism 310. The release lever 202 is arranged to disengage the catch mechanism 310 and release the plunge locking lever 200 from the first unlocked position when the release lever 202 is actuated.

The release lever 202 is pivotally mounted to the housing 102. The release lever 202 is configured to pivot about the pivot axis Y-Y. In some examples, the release lever 202 is pivotable between a first position wherein the catch mechanism 310 is engaged and a second position wherein the catch mechanism 310 is disengaged. Engagement and disengagement of the catch mechanism 310 will be discussed further below.

In some examples, the pivot axis Y-Y and the longitudinal axis X-X intersect. In this way, the locking system 120 is compact and does not take up too much space when mounted to the housing 102.

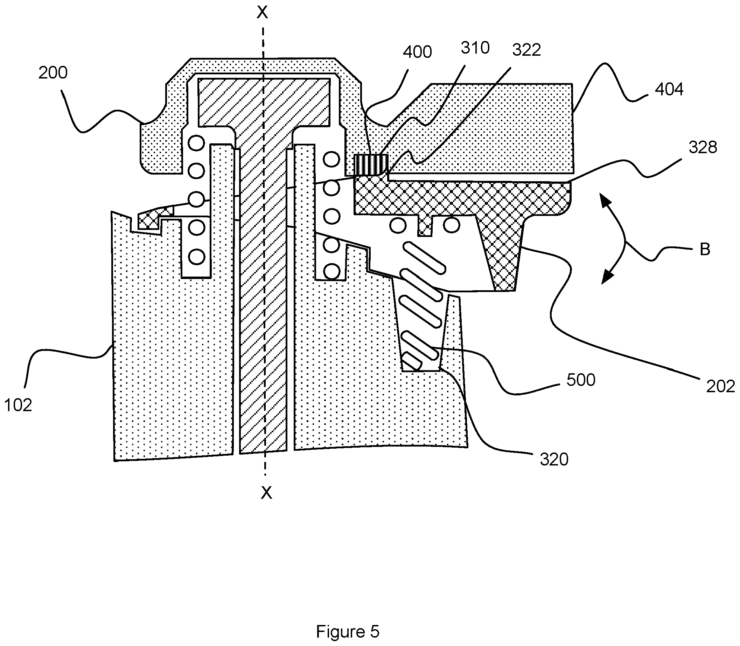

In some examples, the release lever 202 is biased to the first position with a release lever spring 500 (as shown in Figure 5). The release lever spring 500 is mounted in a spring hole 320 in the housing 102. In some examples, any type of spring or biasing means can be used to urge the release lever 202 to the first position.

The release lever 202 comprises a curved cut-out 312 which engages a pivot surface 316 on reciprocal projecting finger 314 mounted on the housing 102. A portion of the housing 102 is represented with dotted lines in Figure 3. The locking bolt 300 is configured to be inserted into a reciprocal conduit 318 in the housing 102. The reciprocal conduit 318 and the longitudinal axis X-X intersect with the second guide post 110. In this way, translational or rotational movement of the locking bolt 300 with respect to the longitudinal axis X-X engages the second guide post 110.

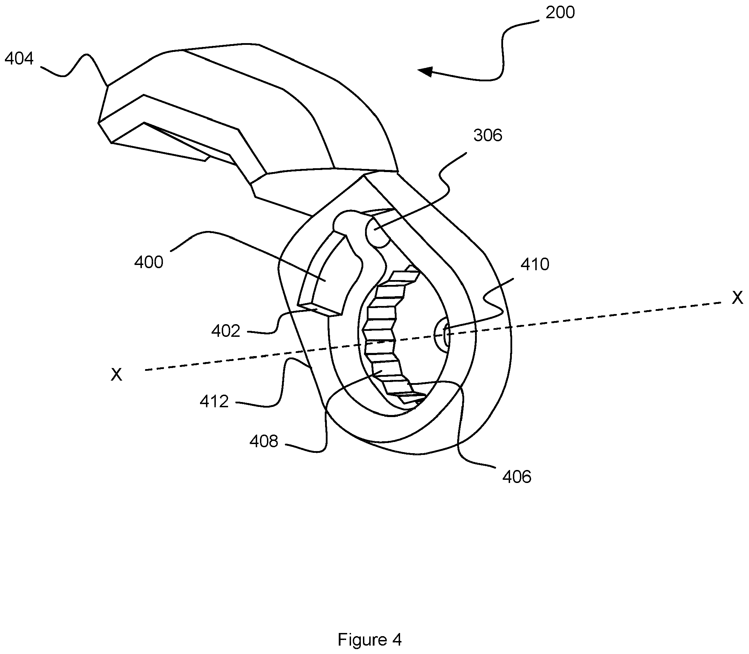

In some examples, the catch mechanism 310 comprises a first part 322 mounted on the release lever 202 engageable with a second part 400 (as shown in Figure 4) mounted on the plunge locking lever 200. In this way, the first part 322 and the second part 400 are respectively integral with the release lever 202 and the plunge locking lever 200.

In some examples, the first part 322 is a hook 322 and the second part 400 is a reciprocal groove 400. The hook 322 comprises an outer camming surface 324 and a first retaining surface 326 in a plane normal to the plane of the release lever 202. The reciprocal groove 400 comprises a second retaining surface 402 (as shown in Figure 4). The first and second retaining surfaces 326, 402 are arranged to abut each other. When the first and second retaining surfaces 326, 402 are engaged in the first unlocked position, the plunge locking lever 200 is prevented from rotating back towards the locked position.

In some other examples, (not shown) the hook 322 is mounted on the plunge locking lever 200 and the reciprocal groove 400 is mounted on the release lever 202. In some other alternative examples, the catch mechanism 310 can comprise a peg and a reciprocal hole (not shown) or any other suitable mechanism for holding the plunge locking lever 200 in the first unlocked position shown in Figure 2c.

In other examples the first part 322 of the catch mechanism 310 is not integral with the release lever 202. Indeed, the release lever 202 is mechanically coupled via linkages such that actuation of the release lever 202 causes the linkages to disengage the catch mechanism 310. In some other examples, the release lever 202 is replaced with a depressible button (not shown) which is mechanically coupled to the catch mechanism 310.

In order to release the plunge locking lever 200, the user depresses the release lever 202. The release lever 202 comprises a flat paddle 328. The paddle 328 provides a convenient area for the user to manually depress the release lever 202 with their finger. The paddle 328 is accessible to the user when the plunge locking lever 200 is in the first unlocked position as shown in Figure 2c. In some examples, the paddle 328 is accessible underneath the plunge locking lever 200 in the first unlocked position. Accordingly, when the user depresses the paddle 328 with their fingers, the user's fingers do not obstruct the path of the plunge locking lever 200 returning to the locked position.

Turning to Figure 4, the plunge locking lever 200 will be discussed in further detail. Figure 4 shows a perspective view of the plunge locking lever 200. The plunge locking lever 200 comprise a user actuatable lever arm 404. The user actuatable lever arm 404 comprises a curved path such that the user actuatable lever arm 404 does not obscure the release lever 202 in the held unlocked position as shown in Figure 2c.

The plunge locking lever 200 comprises a recess 406 for receiving the head 330 of the locking bolt 300. The head 330 of the locking bolt 300 is hexagonal and the recess 406 comprises a plurality of teeth 408 for engaging the sides of the head 330 of the locking bolt 300. Whilst the head 330 of the locking bolt 300 as shown in Figure 3 is hexagonal, the head 330 can be square or any other suitable shape. The plunge locking lever 200 comprises a fastening hole 410 for receiving a fastening bolt (not shown). The fastening bolt is arranged to project through the fastening hole 410 and into a reciprocal threaded hole 332 in the head 330 of the locking bolt 300. Accordingly, the fastening bolt fixes the plunge locking lever 200 to the locking bolt 300. In this way, rotation of the plunge locking lever 200 is transmitted to the locking bolt 300 and the locking bolt 300 selectively engages the second guide post 110 in dependence of the position of the plunge locking lever 200.

The recess 406 and the plurality of teeth 408 provide a plurality of different relative positions between the head 330 of the locking bolt 300. This aids the correct orientation of the plunge locking lever 200 with respect to the second handle 114 during assembly of the router 100.

The plunge locking lever 200 comprises a rotatable inner surface 412 which is configured to engage the outer camming surface 324 of the release lever 202. The engagement of the rotatable inner surface 412 of the plunge locking lever 200 and the outer camming surface 324 of the release lever 202 will be discussed in further detail below.

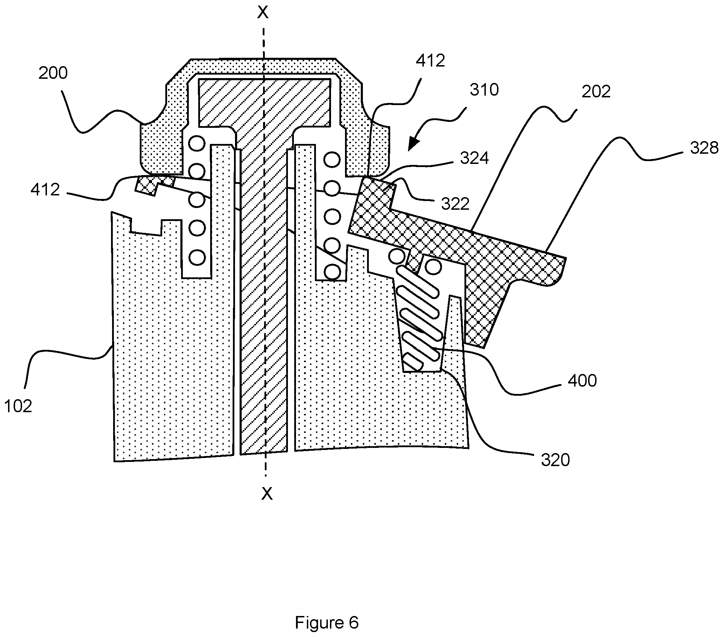

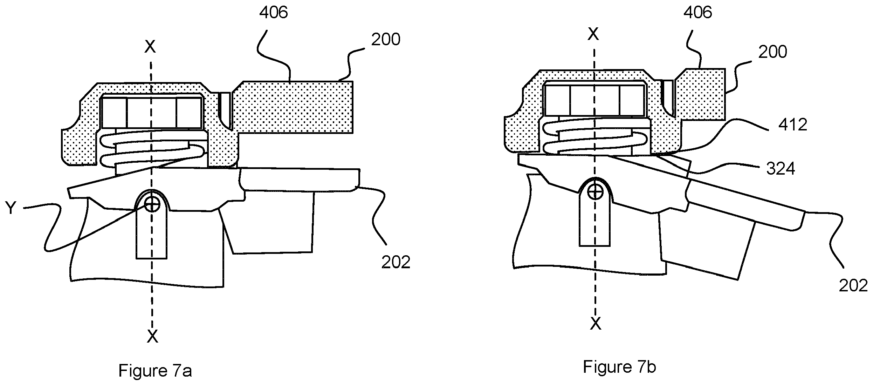

The catch mechanism 310 will now be described in further detail in reference to Figures 5, 6, 7a and 7b. Figures 5 and 6 shows a cross sectional side view of the locking system 120 of the router 100. Figures 7a and 7b show plan cross sectional views of the locking system 120 of the router 100.

Figures 5 and 7a show the catch mechanism 310 in engagement and the release lever 202 in the first position. Figures 6 and 7b show the catch mechanism 310 in disengagement and the release lever 202 in the second position.

Figures 5, 7a show the plunge locking lever 200 in the first unlocked position as shown in Figure 2c. The first part 322 of the catch mechanism 310 is engaged with the second part 400 of the catch mechanism 310. In order to release the catch mechanism 310, the release lever 202 is pivoted from the first position as shown in Figure 5 to the second position as shown in Figure 6. The release lever 202 is pivoted in the direction of the arrow B as shown in Figure 5.

Once the release lever 202 is in the second position, the hook 322 is disengaged from the reciprocal groove 400 in the plunge locking lever 200. The plunge locking lever 200 snaps back to the locked position as shown in Figure 2a.

When the plunge locking lever 200 is in the locked position, the rotatable inner surface 412 engages the outer camming surface 324 of the release lever 202. The rotatable inner surface 412 urges against the outer camming surface 324 and the release lever 202 pivots about the pivot axis Y-Y into the second position as shown in Figures 6 and 7b. In this way, the plunge locking lever 200 keeps the release lever 202 and the first part 322 of the catch mechanism 310 out of the path of the plunge locking lever 200. This means that the first part 322 of the catch mechanism 310 can only impede the rotation of the plunge locking lever 200 in the first unlocked position.

In the locked position and the second unlocked position, the first part 322 of the catch mechanism 310 does not interfere with the rotation of the plunge locking lever 200.

The aforementioned locking system 120 allows the user to easily select between a plunge mode and a fixed mode. The locking system 120 requires the user to positively engage the release lever 202 when the locking system 120 has been locked in the plunge mode. This means that the user cannot accidentally force the plunge locking lever 200 to return to the locked position. Furthermore, the locking system 120 does not require the user to force the plunge locking lever 200 past the catch mechanism 310. Accordingly, the locking system is less likely to break due to repeated use.

In some examples the power tool 100 is mountable on a plunge base (not shown). In these examples, the power tool is a router, a plunge saw, a drill, a multitool, an oscillating tool or any other suitable power tool mountable on a plunge base.

The plunge base is engageable with a workpiece and allows the power tool 100 to be plunged towards the workpiece when mounted in the plunge base. In this way, the power tool 100 is operable in the same way as the power tool 100 as previously discussed in reference to the examples shown in the Figures.

The plunge base comprises a tool mount for mounting the power tool 100 to the plunge base. The power tool 100 can be selectively mounted and secured to the tool mount via an attachment mechanism such as a clamp. This means that the power tool 100 can be selectively mounted on the plunge base and be operated with or without the plunge base. The plunge base comprises at least one guide post slidably mounted to the tool mount and a base fixed to the at least one guide post.

The tool mount comprises a plunge locking lever mounted to the tool mount which is moveable between a locked position and an unlocked position. In the locked position the at least one guide post is fixed with respect to the tool mount. In the unlocked position the at least one guide post is slidable with respect to the tool mount thereby allowing the user to adjust the distance between the base and the tool mount, wherein the plunge locking lever is biased to the locked position.

The tool mount further comprises a catch mechanism arranged to engage the plunge locking lever in the unlocked position. The catch mechanism is mechanically coupled to a release lever arranged to disengage the catch mechanism and release the plunge locking lever from the unlocked position. The plunge locking lever, the catch mechanism and the release lever are the same and operate in a similar way as discussed with respect to previous examples.

## Claims

1. A power tool comprising:
a housing;
a motor assembly arranged to rotate a cutting tool, the motor being mounted in the housing;
at least one guide post slidably mounted to the housing;
a base fixed to the at least one guide post;
a plunge locking lever mounted to the housing moveable between a locked position wherein the at least one guide post is fixed with respect to the housing and an unlocked position wherein the at least one guide post is slidable with respect to the housing thereby adjusting the distance between the base and the housing wherein the plunge locking lever is biased to the locked position; and
a catch mechanism arranged to engage the plunge locking lever in the unlocked position;
**characterized in that**
the catch mechanism is mechanically coupled to a release lever arranged to disengage the catch mechanism and release the plunge locking lever from the unlocked position.

2. A power tool according to claim 1 wherein the plunge locking lever is moveable to a manually held unlocked position between the locked position and the unlocked position.

3. A power tool according to any of the preceding claims wherein the catch mechanism comprises a first part mounted on the release lever engageable with a second part mounted on the plunge locking lever.

4. A power tool according to claim 3 wherein the first part is a hook and the second part is a reciprocal groove.

5. A power tool according to any of the preceding claims wherein the release lever is pivotable between a first position wherein the catch mechanism is engaged and a second position wherein the catch mechanism is disengaged.

6. A power tool according to claim 5 wherein the release lever is biased to the first position.

7. A power tool according to any of the preceding claims wherein the plunge locking lever is fixed to a rod releasably engageable with the at least one slidable guide post.

8. A power tool according to claim 7 wherein the rod is threaded through a spring arranged to bias the plunge locking lever.

9. A power tool according to any of the preceding claims wherein the plunge locking lever is rotatable between the locked position and the unlocked position.

10. A power tool according to any of the preceding claims wherein an axis of rotation of the plunge locking lever intersects with a pivot axis of the release lever.

11. A power tool according to any of the preceding claims wherein at least a portion of the release lever extends adjacent to the plunge locking lever when the plunge locking lever is engaged in the unlocked position.

12. A power tool according to any of the preceding claims wherein the plunge locking lever comprises a rotatable inner surface engageable with an outer surface of the release lever.

13. A power tool according to claim 12 wherein the rotatable inner surface engages the outer surface the plunge locking lever is in the locked position and urges the release lever into the second position.

14. A power tool according to any of the preceding claims wherein the plunge locking lever and the release lever are mounted adjacent to a handle of the router.

15. A plunge base for a power tool, the plunge base comprising:
a tool mount for mounting the power tool to the plunge base;
at least one guide post slidably mounted to the tool mount;
a base fixed to the at least one guide post;
a plunge locking lever mounted to the tool mount moveable between a locked position wherein the at least one guide post is fixed with respect to the tool mount and an unlocked position wherein the at least one guide post is slidable with respect to the tool mount thereby adjusting the distance between the base and the tool mount, wherein the plunge locking lever is biased to the locked position; and
a catch mechanism arranged to engage the plunge locking lever in the unlocked position;
**characterized in that**
the catch mechanism is mechanically coupled to a release lever arranged to disengage the catch mechanism and release the plunge locking lever from the unlocked position.

## Patentansprüche

1. Elektrowerkzeug, umfassend:
ein Gehäuse;
eine Motoranordnung, die ausgelegt ist, um ein Schneidwerkzeug zu drehen, wobei der Motor in dem Gehäuse montiert ist;
mindestens einen Führungspfosten, der verschiebbar am Gehäuse montiert ist;
einen Sockel, der an dem mindestens einen Führungspfosten fixiert ist;
einen am Gehäuse montierten Tauchverriegelungshebel, der zwischen einer verriegelten Position, in welcher der mindestens eine Führungspfosten in Bezug auf das Gehäuse fixiert ist, und einer entriegelten Position beweglich ist, in welcher der mindestens eine Führungspfosten in Bezug auf das Gehäuse verschiebbar ist, wodurch der Abstand zwischen dem Sockel und dem Gehäuse angepasst wird, wobei der Tauchverriegelungshebel in Richtung der verriegelten Position vorgespannt ist; und
einen Arretiermechanismus, der ausgelegt ist, um den Tauchverriegelungshebel in der entriegelten Position eingreifen zu lassen;
**dadurch gekennzeichnet, dass**
der Arretiermechanismus mechanisch mit einem Freigabehebel gekoppelt ist, der ausgelegt ist, um den Arretiermechanismus zu lösen und den Tauchverriegelungshebel aus der entriegelten Stellung freizugeben.

2. Elektrowerkzeug nach Anspruch 1, wobei der Tauchverriegelungshebel zwischen der verriegelten Position und der entriegelten Position in eine manuell gehaltene entriegelte Position bewegbar ist.

3. Elektrowerkzeug nach einem der vorstehenden Ansprüche, wobei der Arretiermechanismus einen ersten Teil umfasst, der an dem Freigabehebel montiert ist und mit einem zweiten Teil in Eingriff gebracht werden kann, der an dem Tauchverriegelungshebel montiert ist.

4. Elektrowerkzeug nach Anspruch 3, wobei der erste Teil ein Haken ist und der zweite Teil eine gegenseitige Nut ist.

5. Elektrowerkzeug nach einem der vorstehenden Ansprüche, wobei der Freigabehebel zwischen einer ersten Position, in welcher der Arretiermechanismus eingreift, und einer zweiten Position, in welcher der Arretiermechanismus losgelöst ist, schwenkbar ist.

6. Elektrowerkzeug nach Anspruch 5, wobei der Freigabehebel in die erste Position vorgespannt ist.

7. Elektrowerkzeug nach einem der vorstehenden Ansprüche, wobei der Tauchverriegelungshebel an einer Stange fixiert ist, die lösbar mit dem mindestens einen verschiebbaren Führungspfosten in Eingriff gebracht werden kann.

8. Elektrowerkzeug nach Anspruch 7, wobei die Stange durch eine Feder eingefädelt ist, die ausgelegt ist, um den Tauchverriegelungshebel vorzuspannen.

9. Elektrowerkzeug nach einem der vorstehenden Ansprüche, wobei der Tauchverriegelungshebel zwischen der verriegelten Position und der entriegelten Position drehbar ist.

10. Elektrowerkzeug nach einem der vorstehenden Ansprüche, wobei sich eine Drehachse des Tauchverriegelungshebels mit einer Schwenkachse des Freigabehebels schneidet.

11. Elektrowerkzeug nach einem der vorstehenden Ansprüche, wobei sich mindestens ein Abschnitt des Freigabehebels angrenzend an den Tauchverriegelungshebel erstreckt, wenn der Tauchverriegelungshebel in der entriegelten Position ist.

12. Elektrowerkzeug nach einem der vorstehenden Ansprüche, wobei der Tauchverriegelungshebel eine drehbare Innenfläche umfasst, die mit einer Außenfläche des Freigabehebels in Eingriff gebracht werden kann.

13. Elektrowerkzeug nach Anspruch 12, wobei die drehbare Innenfläche mit der Außenfläche in Eingriff steht, wenn der Tauchverriegelungshebel in der verriegelten Position ist, und den Freigabehebel in die zweite Position zwingt.

14. Elektrowerkzeug nach einem der vorstehenden Ansprüche, wobei der Tauchverriegelungshebel und der Freigabehebel angrenzend an einen Griff des Fräsers montiert sind.

15. Tauchsockel für ein Elektrowerkzeug, wobei der Tauchsockel umfasst:
eine Werkzeughalterung zum Montieren des Elektrowerkzeugs am Tauchsockel;
mindestens einen Führungspfosten, der verschiebbar an der Werkzeughalterung montiert ist;
einen Sockel, der an dem mindestens einen Führungspfosten fixiert ist;
einen an der Werkzeughalterung montierten Tauchverriegelungshebel, der zwischen einer verriegelten Position, in welcher der mindestens eine Führungspfosten in Bezug auf die Werkzeughalterung fixiert ist, und einer entriegelten Position beweglich ist, in welcher der mindestens eine Führungspfosten in Bezug auf die Werkzeughalterung verschiebbar ist, wodurch der Abstand zwischen dem Sockel und der Werkzeughalterung angepasst wird, wobei der Tauchverriegelungshebel in Richtung der verriegelten Position vorgespannt ist; und
einen Arretiermechanismus, der ausgelegt ist, um den Tauchverriegelungshebel in der entriegelten Position eingreifen zu lassen;
**dadurch gekennzeichnet, dass**
der Arretiermechanismus mechanisch mit einem Freigabehebel gekoppelt ist, der ausgelegt ist, um den Arretiermechanismus zu lösen und den Tauchverriegelungshebel aus der entriegelten Stellung freizugeben.

## Revendications

1. Outil électrique comprenant :
un boîtier ;
un ensemble moteur agencé pour faire tourner un outil de coupe, le moteur étant monté dans le boîtier ;
au moins un montant de guidage monté coulissant sur le boîtier ;
une base fixée à le au moins un montant de guidage ;
un levier de verrouillage plongeant monté sur le boîtier, pouvant se déplacer entre une position verrouillée dans laquelle le au moins un montant de guidage est fixe par rapport au boîtier, et une position déverrouillée dans laquelle le au moins un montant de guidage peut coulisser par rapport au boîtier, ce qui permet d'ajuster la distance entre la base et le boîtier, dans lequel le levier de verrouillage plongeant est sollicité vers la position verrouillée ; et
un mécanisme à loquet agencé pour mettre en prise le levier de verrouillage plongeant dans la position déverrouillée ;
**caractérisé en ce que**
le mécanisme à loquet est couplé mécaniquement à un levier de libération agencé pour désolidariser le mécanisme à loquet et libérer le levier de verrouillage plongeant de la position déverrouillée.

2. Outil électrique selon la revendication 1, dans lequel le levier de verrouillage plongeant peut se déplacer vers une position déverrouillée maintenue manuellement entre la position verrouillée et la position déverrouillée.

3. Outil électrique selon l'une quelconque des revendications précédentes, dans lequel le mécanisme à loquet comprend une première partie montée sur le levier de libération pouvant venir en prise avec une seconde partie montée sur le levier de verrouillage plongeant.

4. Outil électrique selon la revendication 3, dans lequel la première partie est un crochet et la seconde partie est une rainure réciproque.

5. Outil électrique selon l'une quelconque des revendications précédentes, dans lequel le levier de libération peut pivoter entre une première position dans laquelle le mécanisme à loquet est en prise, et une seconde position dans laquelle le mécanisme à loquet est désolidarisé.

6. Outil électrique selon la revendication 5, dans lequel le levier de libération est sollicité vers la première position.

7. Outil électrique selon l'une quelconque des revendications précédentes, dans lequel le levier de verrouillage plongeant est fixé à une tige pouvant venir en prise de manière libérable avec au moins un montant de guidage coulissant.

8. Outil électrique selon la revendication 7, dans lequel la tige est filetée à travers un ressort agencé pour solliciter le levier de verrouillage plongeant.

9. Outil électrique selon l'une quelconque des revendications précédentes, dans lequel le levier de verrouillage plongeant peut tourner entre la position verrouillée et la position déverrouillée.

10. Outil électrique selon l'une quelconque des revendications précédentes, dans lequel un axe de rotation du levier de verrouillage plongeant croise un axe de pivotement du levier de libération.

11. Outil électrique selon l'une quelconque des revendications précédentes, dans lequel au moins une partie du levier de libération s'étend de manière adjacente au levier de verrouillage plongeant lorsque le levier de verrouillage plongeant est mis en prise dans la position déverrouillée.

12. Outil électrique selon l'une quelconque des revendications précédentes, dans lequel le levier de verrouillage plongeant comprend une surface interne rotative pouvant venir en prise avec une surface externe du levier de libération.

13. Outil électrique selon la revendication 12, dans lequel la surface interne rotative vient en prise entre la surface externe sur laquelle le levier de verrouillage plongeant est dans la position verrouillée, et pousse le levier de libération dans la seconde position.

14. Outil électrique selon l'une quelconque des revendications précédentes, dans lequel le levier de verrouillage plongeant et le levier de libération sont montés adjacents à une poignée de la toupie.

15. Base plongeante pour un outil électrique, la base plongeante comprenant :
un support d'outil pour monter l'outil électrique sur la base plongeante ;
au moins un montant de guidage monté coulissant sur le support d'outil ;
une base fixée à le au moins un montant de guidage ;
un levier de verrouillage plongeant monté sur le support d'outil, pouvant se déplacer entre une position verrouillée dans laquelle le au moins un montant de guidage est fixe par rapport au support d'outil, et une position déverrouillée dans laquelle le au moins un montant de guidage peut coulisser par rapport au support d'outil, ce qui permet d'ajuster la distance entre la base et le support d'outil, dans laquelle le levier de verrouillage plongeant est sollicité vers la position verrouillée ; et
un mécanisme à loquet agencé pour mettre en prise le levier de verrouillage plongeant dans la position déverrouillée ;
**caractérisée en ce que**
le mécanisme à loquet est couplé mécaniquement à un levier de libération agencé pour désolidariser le mécanisme à loquet et libérer le levier de verrouillage plongeant de la position déverrouillée.
